# FASCICULE DE BREVET EUROPEEN

(11) **EP 0 931 679 B1**
(45) Date de publication et mention de la délivrance du brevet: **14.05.2003**
(21) Numéro de dépôt: 99400108.9
(22) Date de dépôt: 18.01.1999
(51) Int. Cl.: B60C 23/04

(54) **Procédé de localisation et de reconnaissance de la position des roues sur un véhicule**
Verfahren zur Lokalisierung und Erkennung der Position von Kraftfahrzeugrädern
Method for locating and recognizing the position of the wheels of a vehicle

(30) Priorité: 23.01.1998 FR 9800717
(43) Date de publication de la demande: 28.07.1999
(73) Titulaire: Johnson Controls Automotive Electronics, 95520 Osny (FR)
(72) Inventeur: Loy, Philippe, 95000 Cergy (FR)
(74) Mandataire: Fruchard, Guy

(56) Documents cités:
- EP-A- 0 806 307
- WO-A-87/03254
- DE-A- 19 608 479

## Description

La présente invention concerne un procédé de localisation de la position des roues sur un véhicule et un procédé de reconnaissance de la position d'une roue sur un véhicule.

On sait que les roues de certains véhicules sont maintenant équipées de modules de détection comportant chacun un capteur de température et de pression ainsi qu'un petit émetteur destiné à transmettre à un organe de traitement porté par le véhicule un signal de détection représentatif d'un état de la roue. Le module de détection est monté sur la jante de la roue à l'intérieur de la zone soumise à la pression. L'émetteur du module de détection effectue périodiquement une émission test destinée à vérifier que le système fonctionne correctement. Le signal test comprend par exemple l'identification de la jante, la tension de la pile d'alimentation contenue dans le module, ainsi que la valeur de la pression et de la température. Dans le cas d'une augmentation de la température ou d'un abaissement de la pression au-delà de seuils prédéterminés, une alarme est émise par le module de détection et l'information correspondante est affichée sur le tableau de bord du véhicule.

Il est bien entendu intéressant pour le conducteur d'un véhicule de savoir qu'une anomalie est survenue sur l'une de ses roues. Toutefois l'urgence d'une intervention dépend beaucoup de la position de la roue sur laquelle l'anomalie est survenue de sorte qu'il est particulièrement utile pour le conducteur d'un véhicule de connaître simultanément à l'existence d'une anomalie la position de la roue correspondante.

Dans les systèmes actuels il est prévu lors du montage en usine d'introduire dans l'organe de traitement l'identité des roues qui sont montées ainsi leur position sur le véhicule. Il est ainsi possible pour l'organe de traitement d'identifier la position d'une roue qui émet un signal de détection contenant son identité. Toutefois, si la position des roues est modifiée, par exemple à l'occasion d'une permutation des roues destinée à équilibrer l'usure des pneus, l'organe de traitement ne peut être informé de la modification de position et continue à afficher la position d'une roue par référence à son identité de sorte que l'information de position affichée en cas d'anomalie ne correspond pas à la position réelle de la roue sur le véhicule.

Il est connu du document DE-A-196 08 479 de déduire la position de la roue de l'intensité du signal de détection reçu par l'organe de traitement. Toutefois, avec un tel mode de localisation, le risque d'une erreur de localisation est relativement important.

Selon l'invention on propose un procédé de localisation de la position des roues sur un véhicule selon la revendication 1, le véhicule ayant des roues équipées chacune d'un module de détection émettant un signal de détection représentatif d'un état de la roue, le véhicule étant équipé d'un organe de traitement du signal de détection des roues, ce procédé comportant les étapes de déterminer à partir d'une enveloppe du signal de détection une signature du signal de détection de chaque roue en fonction de sa position sur le véhicule et de mémoriser cette signature et la position correspondante de la roue dans l'organe de traitement.

On a en effet constaté qu'en raison des différences de propagation du signal de détection en fonction de la position de la roue, ces différences provenant soit du sens de rotation de la roue soit des obstacles constitués par la structure du véhicule, il était possible d'extraire du signal de détection reçu par l'organe de traitement une donnée significative de la position de la roue et constituant une signature du signal de détection correspondant. En particulier, dans le cas d'un signal de détection modulé en fréquence, l'amplitude du signal reçu par l'organe de détection est altéré par la rotation de la roue et par les obstacles fixes du véhicule de sorte que l'enveloppe de ce signal constitue une signature représentative de la position de la roue.

De préférence, le procédé de localisation comporte en outre l'étape d'associer dans une mémoire de l'organe de traitement la signature du signal de détection de chaque roue et une identité de la roue. Ainsi, lorsque les conditions de transmission du signal de détection ne permettent pas l'analyse de la signature de ce signal, il reste possible de reconnaître la position de la roue en utilisant la dernière position de roue mémorisée en relation avec l'identité de la roue considérée.

Selon un autre aspect de l'invention, celle-ci concerne un procédé de reconnaissance de la position d'une roue sur un véhicule selon la revendication 4, le véhicule ayant des roues équipées chacune d'un module de détection émettant un signal de détection représentatif d'un état de la roue, le véhicule étant équipé d'un organe de traitement dans lequel sont mémorisées des signatures du signal de détection élaborées à partir d'une enveloppe du signal de détection pour chaque roue en fonction de sa position, ce procédé comportant les étapes d'analyser la signature d'un signal de détection reçu par l'organe de traitement, de comparer cette signature aux signatures mémorisées et d'en déduire la position de la roue correspondante sur le véhicule.

De préférence, la détermination et l'analyse de la signature sont effectuées pour une vitesse de rotation de roue correspondant à une vitesse du véhicule comprise entre 60 et 100 km/heure. On bénéficie ainsi tout à la fois d'une vitesse de rotation de la roue suffisamment importante pour engendrer une composante significative dans la signature du signal de détection, et d'une bonne définition de l'enveloppe du signal de détection.

D'autres caractéristiques et avantages de l'invention ressortiront encore à la lecture de la description qui suit d'un mode de réalisation particulier non limitatif de l'invention, en relation avec les figures ci-jointes parmi lesquelles :

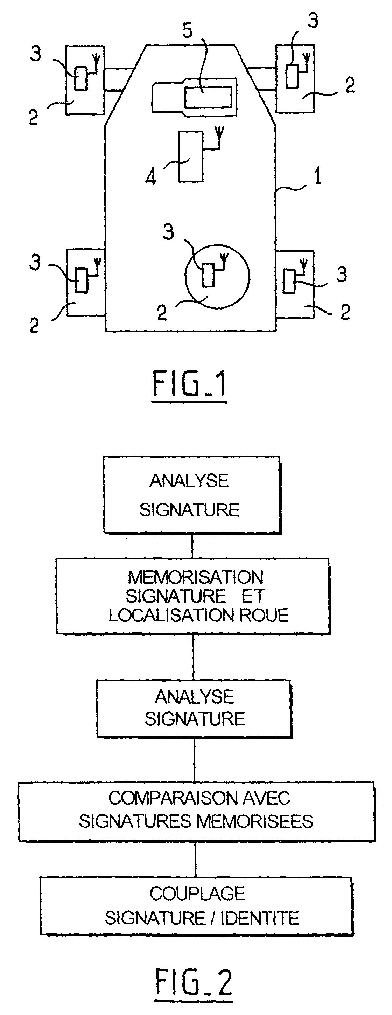

- la figure 1 est une représentation schématique d'un véhicule permettant la mise en oeuvre des procédés selon l'invention,
- la figure 2 est un schéma par blocs des procédés de localisation et de reconnaissance de la position d'une roue sur un véhicule.

En référence aux figures, le procédé de localisation et de reconnaissance de la position d'une roue est destiné à être mis en oeuvre sur un véhicule 1 ayant des roues 2 chacune équipée de façon connue en soi d'un module de détection 3 émettant un signal de détection modulé numériquement en amplitude ou en fréquence de façon représentative d'un état de la roue, en particulier la température et la pression de la roue, vers un organe de traitement 4 monté dans le véhicule. Lorsque le véhicule se déplace en marche avant, les roues droites du véhicule vues depuis l'extérieur de celui-ci tournent dans un sens horaire tandis que les roues gauches tournent dans un sens anti-horaire. Les modules 3 étant montés sur les jantes des roues, c'est-à-dire à distance de l'axe de rotation des roues, la rotation des roues entraîne de ce seul fait une différence de propagation des signaux émis par les modules contenus dans les roues droites et gauches. En outre, le bloc moteur 5 constitue un obstacle qui modifie de façon différente la propagation des signaux provenant des modules avant et la propagation des signaux provenant des modules arrière, d'autres éléments de la structure du véhicule étant susceptibles d'augmenter ces différences. Le signal de détection reçu par l'unité de traitement est ainsi modulé analogiquement en amplitude.

Selon l'invention on prévoit d'exploiter cette modulation pour déterminer une signature du signal de détection de chaque roue en fonction de sa position. La signature est par exemple déterminée en filtrant et en traitant de façon appropriée le signal de détection reçu par l'organe de traitement 4 pour extraire de celui-ci le profil de l'enveloppe du signal de détection et mémoriser la signature correspondante dans l'organe de traitement 4.

La mémorisation initiale des signatures correspondant à chacune des roues peut être réalisée par modélisation pour un véhicule d'un type donné en montant successivement une roue équipée d'un module de détection dans chacune des positions sur le véhicule et en enregistrant la signature du signal de détection reçu dans l'organe de traitement puis en mémorisant ces signatures dans chacun des organes de traitement des véhicules du même type tout en associant chaque signature à la position correspondante de la roue sur le véhicule. Un autre procédé pour réaliser la mémorisation des signatures associées à la position des roues consiste à relever l'identité des modules de chacune des roues du véhicule, lors du montage initial, à associer dans la mémoire de l'organe de traitement cette identité à la position des roues telles qu'elles ont été montées, puis à mettre les roues en rotation et à déterminer la signature de chacune des roues en l'associant à l'identité transmise par le signal de détection. La double association identité/position de la roue, et identité/signature du signal de détection permet alors de réaliser l'association entre la signature du signal de détection et la position de la roue correspondante.

Dans un cas comme dans l'autre, la signature du signal de détection est ainsi mémorisée en relation avec la position d'une roue par rapport au véhicule. Pour reconnaître ultérieurement la position d'une roue émettant un signal de test ou une alarme, il suffit donc d'analyser la signature d'un signal de détection reçu par l'organe de traitement 4, de comparer cette signature aux signatures mémorisées et d'en déduire la position de la roue correspondante sur le véhicule.

On remarquera que la perturbation liée à la rotation des roues varie en fonction de leur vitesse de rotation. Selon l'invention on prévoit de préférence d'effectuer la modélisation initiale et l'analyse des signatures pour une vitesse de rotation des roues correspondant à une vitesse de déplacement du véhicule de l'ordre de 60 à 100 km/heure. Afin de pouvoir effectuer une reconnaissance de la position d'une roue en dehors de ces vitesses, on prévoit avantageusement de mémoriser dans l'organe de traitement la dernière position relevée pour chaque roue en relation avec son identité. Pour la reconnaissance de la position d'une roue il suffit alors de relever l'identité de la roue transmise de façon connue en soi dans le signal de détection pour en déduire la position de celle-ci.

Bien entendu l'invention n'est pas limitée au mode de réalisation décrit et on peut y apporter des variantes de réalisation sans sortir du cadre de l'invention tel que défini par les revendications.

## Revendications

1. Procédé de localisation de la position des roues sur un véhicule (1) ayant des roues (2) équipées chacune d'un module de détection (3) émettant un signal de détection représentatif d'un état de la roue, le véhicule étant équipé d'un organe de traitement (4) du signal de détection, **caractérisé en ce qu'**il comporte les étapes de déterminer à partir d'une enveloppe du signal de détection une signature du signal de détection de chaque roue en fonction de sa position sur le véhicule et de mémoriser cette signature et la position correspondante de la roue dans l'organe de traitement.

2. Procédé selon la revendication 1, **caractérisé en ce qu'**il comporte en outre l'étape d'associer dans l'organe de traitement (4) la position de chaque roue et une identité de celle-ci.

3. Procédé selon la revendication 1 ou la revendication 2, **caractérisé en ce que** la signature du signal de détection est déterminée pour une vitesse de rotation de roue correspondant à une vitesse de déplacement du véhicule comprise entre 60 et 100 km/heure.

4. Procédé de reconnaissance de la position d'une roue sur un véhicule (1) ayant des roues (2) équipées chacune d'un module de détection (3) émettant un signal de détection représentatif d'un état de la roue, **caractérisé en ce que** le véhicule étant équipé d'un organe de traitement (4) dans lequel sont mémorisées des signatures du signal de détection élaborées à partir d'une enveloppe du signal de détection pour chaque roue en fonction de la position de la roue concernée, le procédé comportant les étapes d'analyser la signature d'un signal de détection reçu par l'organe de traitement, de comparer cette signature aux signatures mémorisées, et d'en déduire la position de la roue correspondante sur le véhicule.

5. Procédé selon la revendication 4, **caractérisé en ce que** la reconnaissance de la position d'une roue est effectuée pour une vitesse de rotation de la roue correspondant à une vitesse du véhicule comprise entre 60 et 100 km/heure.

6. Procédé selon la revendication 5, **caractérisé en ce que** pour des vitesses du véhicule ne permettant pas une reconnaissance de la position d'une roue par analyse de la signature du signal de détection, la reconnaissance de la position de la roue est effectuée en utilisant la dernière position de roue mémorisée en relation avec l'identité de la roue considérée.

## Patentansprüche

1. Verfahren zum Orten der Position der Räder auf einem Fahrzeug (1), das Räder (2) aufweist, die jeweils mit einem Detektionsmodul (3) versehen sind, das ein Detektionssignal sendet, das für einen Zustand des Rads repräsentativ ist, wobei das Fahrzeug mit einem Organ (4) zur Verarbeitung des Detektionssignals ausgestattet ist, **dadurch gekennzeichnet, dass** es die Schritte des Bestimmens, ausgehend von einer Umhüllenden des Detektionssignals einer Signatur des Detektionssignals jedes Rads in Abhängigkeit von seiner Position auf dem Fahrzeug und des Speicherns dieser Signatur und der entsprechenden Position des Rads im Verarbeitungsorgan umfasst.

2. Verfahren nach Anspruch 1, **dadurch gekennzeichnet, dass** es außerdem den Schritt des Assoziierens der Position jedes Rads mit seiner Identität im Verarbeitungsorgan (4) umfasst.

3. Verfahren nach Anspruch 1 oder 2, **dadurch gekennzeichnet, dass** die Signatur des Detektionssignals für eine Raddrehzahl bestimmt wird, die einer Fahrgeschwindigkeit des Fahrzeugs von 60 bis 100 km/Stunde entspricht.

4. Verfahren zum Erkennen der Position eines Rads auf einem Fahrzeug (1), das Räder (2) aufweist, die jeweils mit einem Detektionsmodul (3) ausgestattet sind, das ein Detektionssignal sendet, das für einen Zustand des Rads repräsentativ ist, **dadurch gekennzeichnet, dass** das Fahrzeug mit einem Verarbeitungsorgan (4) versehen ist, in dem die Signaturen des Detektionssignals gespeichert sind, die ausgehend von einer Umhüllenden des Detektionssignals für jedes Rad in Abhängigkeit von der Position des jeweiligen Rads erstellt wurden, wobei das Verfahren die Schritte des Analysierens der Signatur eines vom Verarbeitungsorgan empfangenen Detektionssignals, des Vergleichens dieser Signatur mit den gespeicherten Signaturen und Ableitens der Position des entsprechenden Rads auf dem Fahrzeug daraus umfasst.

5. Verfahren nach Anspruch 4, **dadurch gekennzeichnet, dass** das Erkennen der Position eines Rads für eine Raddrehzahl durchgeführt wird, die einer Fahrgeschwindigkeit des Fahrzeugs von 60 bis 100 km/Stunde entspricht.

6. Verfahren nach Anspruch 5, **dadurch gekennzeichnet, dass** für Geschwindigkeiten des Fahrzeugs, die kein Erkennen der Position eines Rads durch Analysieren der Signatur des Detektionssignals gestatten, das Erkennen der Position des Rads unter Verwendung der letzten, in Bezug auf die Identität des betroffenen Rads gespeicherten Radposition durchgeführt wird.

## Claims

1. A method of locating the positions of wheels on a vehicle (1) having wheels (2) fitted with respective detector modules (3) each transmitting a detection signal representative of a state of the wheel, the vehicle being fitted with a processor member (4) for processing the detection signal, the method being **characterized in that** it comprises the steps of using the envelope of the detection signal to determine a signature for the detection signal of each wheel as a function of its position on the vehicle, and of storing said signature and the position of the corresponding wheel in the processor member.

2. A method according to claim 1, **characterized in that** it further comprises the step of associating the position of each wheel and the identity thereof in the processor member (4).

3. A method according to claim 1 or claim 2, **characterized in that** the signature of the detection signal is determined for a speed of wheel rotation corresponding to the vehicle traveling at a speed lying in the range 60 km/h to 100 km/h.

4. A method of recognizing the position of a wheel on a vehicle (1) having wheels (2) fitted with respective detector modules (3) each transmitting a detection signal representative of a state of the wheel, **characterized in that** the vehicle being fitted with a processor member (4) in which detection signal signatures are stored derived from a detection signal envelope for each wheel as a function of the position of the wheel in question, the method comprising the steps of analyzing the signature of a detection signal received by the processor member, of comparing said signature with the stored signatures, and of deducing therefrom the position on the vehicle of the corresponding wheel.

5. A method according to claim 4, **characterized in that** the position of a wheel is recognized at a speed of wheel rotation corresponding to the vehicle traveling at a speed lying in the range 60 km/h to 100 km/h.

6. A method according to claim 5, **characterized in that** for vehicle speeds that do not enable the position of a wheel to be recognized by analyzing the signature of the detection signal, the position of the wheel is recognized by using the position of the wheel as stored most recently in association with the identity of the wheel in question.
